# FASCICULE DE BREVET EUROPEEN

(11) **EP 1 640 822 B1**
(45) Date de publication et mention de la délivrance du brevet: **01.08.2012**
(21) Numéro de dépôt: 04022605.2
(22) Date de dépôt: 22.09.2004
(51) Int. Cl.: G04B 19/10, G04B 19/12, G04D 3/00

(54) **Cadran émaillé multi-étages**
Multi-Etage-Zifferblatt
Multi-level enamelled watch face

(43) Date de publication de la demande: 29.03.2006
(73) Titulaire: ASULAB S.A., 2074 Marin (CH)
(72) Inventeur: Bourban, Steve, 1503 Ecublens (CH); Dinger, Rudolf, 2024 Saint-Aubin (CH); Blanckaert, Nicolas, 2000 Neuchâtel (CH)
(74) Mandataire: Couillard, Yann Luc Raymond

(56) Documents cités:
- CH-A- 333 245
- GB-A- 2 052 113
- PATENT ABSTRACTS OF JAPAN vol. 011, no. 032 (P-541), 30 janvier 1987 (1987-01-30) -& JP 61 202184 A (CITIZEN WATCH CO LTD), 6 septembre 1986 (1986-09-06)

## Description

### DOMAINE TECHNIQUE

La présente invention a pour objet un procédé de fabrication d'un cadran émaillé multi-étages, c'est-à-dire un cadran dont la plaque de base présente une ou plusieurs dépressions, ou inversement bossages, la surface de ladite plaque étant recouverte de couches d'émail. Un tel cadran est notamment utilisé dans une pièce d'horlogerie dans laquelle les dépressions délimitent par exemple des cadrans secondaires, tels que ceux de la petite seconde, ou des compteurs de chronographe. Cette conception multi-étages peut également avoir un but simplement esthétique.

### ARRIERE-PLAN TECHNOLOGIQUE

La façon usuelle de réaliser des cadrans émaillés multi-étages consiste à prendre une plaque métallique de très faible épaisseur, généralement en cuivre, alliage de cuivre ou argent, à former à la surface de ce substrat par dépôts et cuissons successifs une couche d'émail ayant une épaisseur généralement comprise entre 600 et 800 µm, ainsi qu'une couche de contre-émaillage de plus faible épaisseur sur la face arrière de la plaque. Le contre-émaillage a une fonction essentiellement technique en s'opposant aux tensions qui se créent dans la plaque métallique lors des cuissons successives. Le document CH 333 245 propose une telle technique d'émaillage et de contre-émaillage avec une plaque métallique dont les creux sont remplis par une couche d'émail afin de former un cadran dont la surface supérieure est plane.
On effectue ensuite la découpe d'une fenêtre aux dimensions souhaitées pour le cadran secondaire, puis on usine la surface d'une pastille émaillée produite de manière analogue et découpée aux dimensions de la fenêtre en réduisant éventuellement l'épaisseur de l'émail, et finalement on soude la pastille dans la fenêtre, ce qui produit au dos du cadran une marque bien visible et peut endommager le cadran secondaire. Le procédé qui vient brièvement d'être décrit est très délicat à mettre en oeuvre, comporte un taux de rebut important et donc conduit finalement à un produit fini dont le coût est très élevé.

Pour donner plus de relief à un cadran émaillé sur métal sans avoir les inconvénients de l'art antérieur précité, il a également été proposé de prendre une plaque plus épaisse et d'usiner des creusures qu'on recouvre ensuite d'une couche d'émail suffisamment épaisse pour masquer l'aspect métallique du fond. Le cadran émaillé ainsi obtenu devient nettement plus épais, ce qui entraîne une augmentation des dimensions de la boite, qui ne correspond alors plus aux exigences actuelles pour les montres-bracelets.

Il a également été proposé de déformer la plaque métallique de base, par exemple par étampage, puis de procéder à l'émaillage. Les parties qui ont été déformées ont un comportement thermique modifié, de sorte que les opérations de cuisson provoquent le plus souvent des craquelures dans les couches d'émail conduisant à mettre au rebut la pièce fabriquée.

### RESUME DE L'INVENTION

La présente invention vise donc à pallier les inconvénients de l'art antérieur précité en procurant un cadran multi-étages ne nécessitant pas de contre-émaillage du revers du cadran, ni de soudage d'une pièce pour créer par exemple un cadran secondaire en creux.

A cet effet, l'invention a pour objet des procédés de fabrication d'un cadran tels que définis dans les revendications 1, 4, 6 et 7.

Dans un premier mode de réalisation, les reliefs souhaités à la surface du cadran sont formés lors de la fabrication de la plaque de base en céramique par exemple par le procédé CIM (Ceramic Injection Molding) en utilisant un moule approprié, puis on procède, par dépôts et cuissons successifs, à l'émaillage de toute la surface et des reliefs pour obtenir directement un cadran terminé. De façon équivalente, les reliefs peuvent être formés par usinage dans la surface plane d'une plaque de base en céramique.

Selon un deuxième mode de réalisation, on effectue d'abord l'émaillage de toute la surface de la plaque de base, puis on effectue un usinage par lamage ou gravage à travers toute l'épaisseur de la couche d'émail et partiellement à travers la plaque de base, puis on procède à l'émaillage du fond de l'évidement ainsi obtenu. Selon une variante, on forme un revêtement émail suffisamment épais pour effectuer l'usinage de l'évidement, sans atteindre la plaque de fond.

Selon un troisième mode de réalisation, on effectue d'abord un revêtement émail de toute la surface de la plaque de base, puis on usine un passage traversant à travers le revêtement émail et la plaque de base. On prépare séparément un insert céramique, ayant les mêmes dimensions que le passage traversant, et dont la surface visible comporte un revêtement émail pouvant être identique ou différent de celui recouvrant toute la surface. L'insert est ensuite introduit dans le passage traversant et éventuellement maintenu en place par collage. Selon l'épaisseur totale de l'insert avec son émaillage, il est ainsi possible d'avoir un cadran émaillé présentant un évidement, ou au contraire un bossage.

Comme on le voit, un cadran émaillé multi-étages réalisé avec une plaque de base en céramique ne nécessite plus ni soudure, ni contre-émaillage, étant donné que les coefficients de dilatation thermique de la céramique et de l'émail sont très proches, ce qui n'induit donc pas de déformations devant être compensées.

Toutefois, il est possible de masquer le joint entre la plaque de base et l'insert en collant à ce niveau une plaque additionnelle ayant le même contour que le cadran, ce qui contribue aussi à renforcer le maintien en place de l'insert.

Selon l'esthétique recherchée pour le produit final, incorporant ledit cadran, cette plaque additionnelle peut être en céramique, comme la plaque de base, ou en métal, sachant que sa fonction technique est assez faible.

Selon une variante de ce qui est décrit ci-dessus, lorsque la plaque additionnelle est en céramique, celui-ci peut venir de matière avec l'insert. Selon encore une autre variante, la plaque additionnelle peut être pourvue d'un pied pour la fixation du cadran, et le pourtour de ladite plaque additionnelle peut être prévu pour permettre son encastrement dans le fond de la plaque de base.

### BREVE DESCRIPTION DES DESSINS

D'autres caractéristiques et avantages de la présente invention apparaîtront dans la description suivante de plusieurs modes de réalisation de l'invention, donnés à titre illustratif et non limitatif, en référence aux dessins annexés dans lesquels :
- les figures 1A, 1B et 1C représentent en coupe les étapes conduisant à un premier mode de réalisation;
- les figures 2A, 2B et 2C représentent un deuxième mode de réalisation;
- les figures 3A et 3B représentent une variante du deuxième mode de réalisation.
- les figures 4A, 4B et 4C représentent un troisième mode de réalisation; et
- les figures 5, 6 et 7 correspondent à des variantes du troisième mode de réalisation.

### DESCRIPTION DETAILLEE DE L'INVENTION

Pour une meilleure compréhension des dessins, on observera d'abord que toutes les épaisseurs n'ont pas été représentées à la même échelle, et qu'on a représenté seulement une partie du cadran comportant un relief.

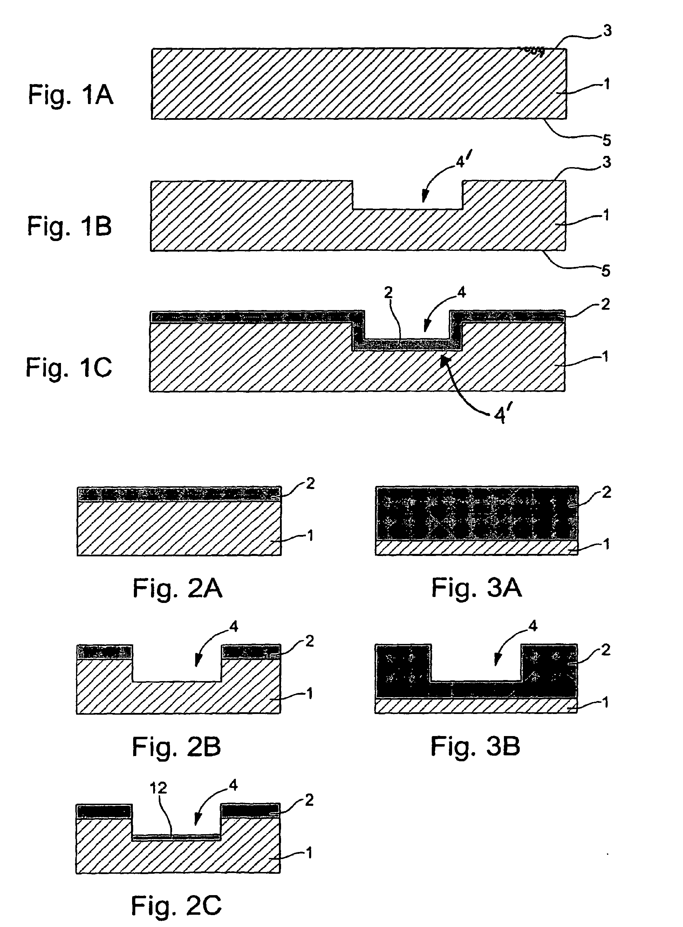

Les figures 1A à 1C représentent un premier mode de réalisation dans lequel le cadran est réalisé à partir d'une plaque de fond 1 en céramique ayant ses deux faces 3, 5 planes et parallèles (figure 1A) et dans laquelle on usine par lamage ou gravage un évidement 4 (figure 1 B). On effectue ensuite par dépôts et cuissons successifs le revêtement émail (figure 1 C). La plaque de fond 1 peut être découpée dans une grande plaque de céramique ayant une épaisseur comprise entre 0,4 mm et 0,9 mm, valeurs permettant d'avoir des propriétés mécaniques satisfaisantes pour le cadran. Il est également possible de réaliser la plaque de fond 1 par préformage directement aux dimensions souhaitées par exemple par le procédé CIM ou par pressage. Dans ce cas, on peut former en même temps l'évidement 4. Il est bien évident qu'on pourrait de la même façon, par usinage, pressage ou par le procédé CIM, former un relief correspondant à un bossage avant l'étape d'émaillage, et éventuellement procéder à un usinage final, par exemple pour améliorer le rapport d'aspect au niveau du relief.

Etant donné que la céramique, par exemple à base d'alumine, a une teinte claire et qu'il est en outre possible d'y incorporer des colorants, le nombre de couches d'émail nécessaire pour avoir la teinte finale souhaitée peut être plus petit, le revêtement émail ayant alors une épaisseur comprise entre 0,1 mm et 0,4 mm. Les coefficients de dilatation thermique de la céramique et de l'émail étant très proches, il ne se produit pas de tension lors des opérations de cuissons susceptibles de déformer la plaque de base 1, de sorte qu'aucun contre-émaillage n'est nécessaire.

Les figures 2A à 2C correspondent à un deuxième mode de réalisation. On part d'une plaque de base 1 à la surface de laquelle on a déjà formé un premier revêtement émail 2. On effectue ensuite par usinage un évidement 4 qui traverse tout le premier revêtement émail 2 et partiellement la plaque de base 1 en céramique. On effectue ensuite un deuxième revêtement émail 12 dans le fond de l'évidement 4, par exemple par tamponnage. Il est ainsi possible de donner à l'évidement une teinte différente de celle de la surface du cadran. On peut évidemment procéder comme décrit dans le premier mode de réalisation, en effectuant ce deuxième revêtement émail sur toute la surface du cadran et des reliefs avec une teinte d'émail identique ou différente de celle du premier revêtement. Selon une variante de réalisation représentée aux figures 3A et 3B, on effectue un revêtement émail 2 suffisamment épais, par exemple de 0,4 mm, pour effectuer l'usinage dans ledit revêtement émail, sans atteindre la plaque de base 1 en céramique. Pour obtenir un bon état de surface, il est souhaitable d'effectuer une cuisson supplémentaire, permettant d'obtenir un glaçage.

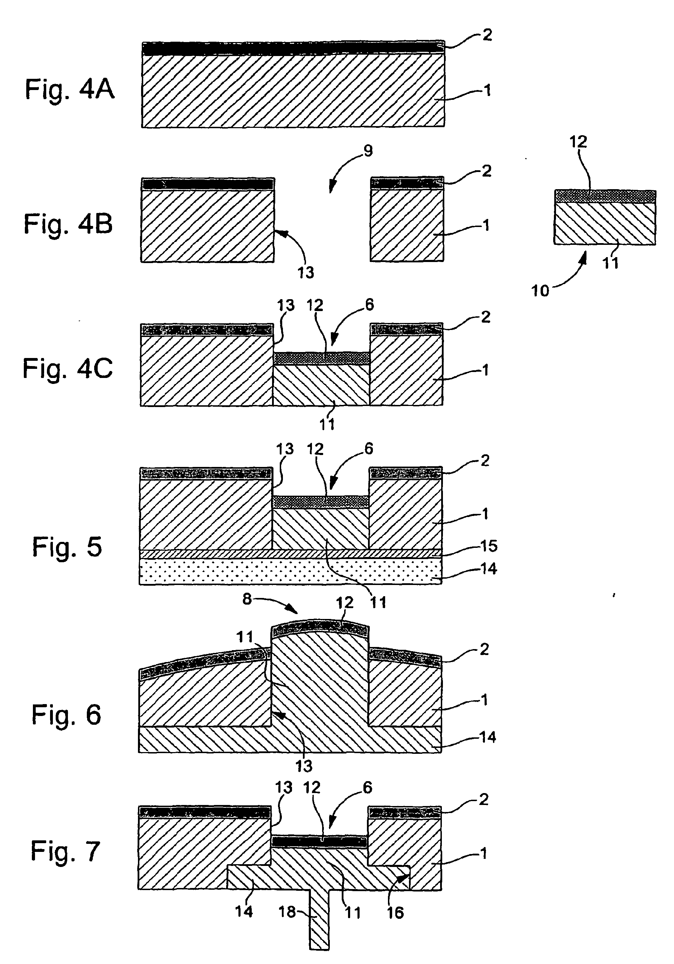

Les figures 4A à 4C concernent un mode de réalisation qui diffère de ceux précédemment décrits en ce que la plaque de base 1 et son revêtement émail 2 sont usinés de façon à créer un passage traversant 9. Séparément, on réalise un insert 10 ayant une base en céramique 11 épousant le contour 13 du passage traversant 9 et comportant un deuxième revêtement émail 12 identique ou différent du premier revêtement émail 2. L'insert 10 est positionné dans le passage 9 en étant éventuellement maintenu par collage. Dans le produit fini représenté à la figure 4C, la base 11 de l'insert 10 a une épaisseur plus faible que celle de la plaque de base 1, de sorte que le relief formé correspond à un évidement. Pour les mêmes raisons que celles mentionnées précédemment, le fond de la plaque de base ne nécessite techniquement aucun contre-émaillage.

Toutefois, pour des raisons esthétiques visant par exemple à masquer le contour 13 de la jonction entre la plaque de base 1 et l'insert 10, il est possible de mettre sur le fond du cadran un adhésif 15 pour coller une plaque additionnelle de masquage 14. Selon l'esthétique recherchée au niveau de la pièce d'horlogerie, le matériau constituant cette plaque additionnelle peut être en céramique, comme la plaque de base, ou en métal, par exemple en cuivre, argent, or, platine ou des alliages de ces métaux.

La figure 6 représente des variantes d'exécution du cadran multi-étages précédemment décrit. On voit tout d'abord que les surfaces visibles du cadran ont des formes courbes, ce qui est très facilement réalisable en utilisant la céramique comme matériau pour la plaque de base, et dans cet exemple pour l'insert, sans créer de tensions particulières lors de l'émaillage, c'est-à-dire toujours sans nécessiter de contre-émaillage. On voit aussi que l'épaisseur de l'insert 10 est supérieure à la hauteur du passage traversant 9, de sorte que le relief formé correspond à un bossage 8. On voit enfin que l'insert peut venir de matière avec une plaque additionnelle de masquage 14 qui sera alors évidemment réalisé en céramique.

La figure 7 montre qu'on peut réaliser, en même temps que l'insert 10 et la plaque additionnelle 14, un pied 18 qui permettra de positionner le cadran, la plaque additionnelle étant représentée dans cet exemple enchâssée dans le fond 5 de la plaque de base. Le pied 18 peut évidemment ne pas occuper une position centrale pour laisser le passage à un axe lorsque l'évidement 12 correspond à un cadran secondaire.

Il est bien évident que les modes de réalisation qui viennent d'être décrits, et qui correspondent aux produits finis représentés, aux figures 1C, 2C, 3B, 4C, 5, 6 et 7, sont permutables. A titre d'exemple non limitatif, il est possible, sans sortir du cadre de l'invention, de combiner les enseignements des figures 1C, 6 et 7 pour obtenir un cadran émaillé en céramique comportant un cadran secondaire en creux ayant une surface bombée et dont la plaque de base comporte un pied.

## Revendications

1. Procédé de fabrication d'un cadran émaillé multi-étages dont la surface comporte des reliefs (4) formant des évidements ou des bossages **caractérisé en ce qu'**il comporte les étapes suivantes :
- former une plaque de base (1) en céramique comportant des reliefs (4') ;
- déposer un revêtement d'émail (2) sur ladite plaque de base (1) pour former ledit cadran, les reliefs (4) du cadran étant de cette manière formés en correspondance avec les reliefs (4') de la plaque de base (1).

2. Procédé selon la revendication précédente, **caractérisé en ce que** lesdits reliefs (4) sont formés par préformage de ladite plaque de base (1).

3. Procédé selon la revendication 1, **caractérisé en ce que** lesdits reliefs (4) sont formés par usinage de ladite plaque de base (1).

4. Procédé de fabrication d'un cadran émaillé multi-étages dont la surface comporte des reliefs (4) formant des évidements ou des bossages **caractérisé en ce qu'**il comporte les étapes suivantes :
- former une plaque de base (1) en céramique ;
- déposer un revêtement d'émail (2) sur ladite plaque de base (1) :
- usiner le revêtement d'émail (2) sans atteindre la plaque de base (1) pour former les reliefs (4) dudit cadran.

5. Procédé selon la revendication précédente, **caractérisé en ce que** le revêtement d'émail (2) comporte une épaisseur de 0,4 mm.

6. Procédé de fabrication d'un cadran émaillé multi-étages dont la surface comporte des reliefs (4) formant des évidements ou des bossages **caractérisé en ce qu'**il comporte les étapes suivante :
- former une plaque de base (1) en céramique ;
- déposer un premier revêtement d'émail (2) sur ladite plaque de base (1) ;
- usiner le premier revêtement d'émail (2) et une partie de la plaque de base (1) pour former lesdits reliefs (4) ;
- déposer un deuxième revêtement d'émail (12) sur toute ladite surface du cadran ou uniquement dans le fond desdits reliefs (4) pour former ledit cadran.

7. Procédé de fabrication d'un cadran émaillé multi-étages dont la surface comporte des reliefs (6) formant des évidements ou des bossages **caractérisé en ce qu'**il comporte les étapes suivantes :
- former une plaque de base (1) en céramique ;
- déposer un premier revêtement d'émail (2) sur ladite plaque de base (1) ;
- usiner le premier revêtement d'émail (2) et la plaque de base (1) pour former un passage traversant (9) ;
- former un insert (10) dont la base (10) en céramique comporte une épaisseur différente de ladite plaque de base (1) ;
- déposer un deuxième revêtement d'émail (12) sur l'insert (10) ;
- positionner l'insert (10) dans le passage traversant (9) pour former lesdits reliefs (6) du cadran.

8. Procédé selon la revendication 7, **caractérisé en ce que** l'insert (10) a une épaisseur inférieure à la hauteur du passage traversant (9) pour former un évidement (6) dans le cadran.

9. Procédé selon la revendication 7, **caractérisé en ce que** l'insert (10) a une épaisseur supérieure à la hauteur du passage traversant (9) pour former un bossage (8) dans le cadran.

10. Procédé selon l'une des revendications 6 à 9, **caractérisé en ce que** le premier revêtement d'émail (2) est identique au deuxième revêtement d'émail (12).

11. Procédé selon l'une des revendications 6 à 9, **caractérisé en ce que** le premier revêtement d'émail (2) est différent du deuxième revêtement d'émail (12).

12. Procédé selon l'une des revendications 7 à 11, **caractérisé en ce qu'**une plaque additionnelle (14) est assujettie à la face arrière du cadran.

13. Procédé selon l'une des revendications 7 à 11, **caractérisé en ce que** l'insert (10) comporte au niveau de son fond une plaque additionnelle (14) venant de matière avec ledit insert (10), ayant un contour compris entre celui du cadran et celui du passage traversant (9), et étant collé sur le fond de la plaque de base (1) ou dans un logement (16) formé dans la plaque de base.

14. Procédé selon l'une des revendications précédentes, **caractérisé en ce que** les faces visibles dudit cadran ont des formes courbes.

15. Procédé selon l'une des revendications précédentes, **caractérisé en ce que** la plaque de base (1) comporte un pied (18) venu de forme afin de positionner ledit cadran.

16. Procédé selon l'une des revendications 13 à 15, **caractérisé en ce que** la plaque additionnelle (14) comporte un pied (18) venu de forme afin de positionner ledit cadran.

17. Pièce d'horlogerie comportant un cadran multi-étages **caractérisé en ce que** le cadran comporte une plaque de base (1) en céramique émaillée et des reliefs (4), le cadran étant obtenu à partir du procédé selon l'une des revendications précédentes.

## Claims

1. Method for manufacturing a multi-stage enamelled dial whose surface includes portions in relief (4) forming recesses or bosses, **characterized in that** the method includes the following steps:
- forming a ceramic base plate (1) containing portions in relief (4');
- depositing an enamel coating (2) on said base plate (1) to form said dial, the portions in relief (4) of the dial thereby being formed to match the portions in relief (4') of the base plate (1).

2. Method according to the preceding claim, **characterized in that** said portions in relief (4) are formed by preforming said base plate (1).

3. Method according to claim 1, **characterized in that** said portions in relief (4) are formed by machining said base plate (1).

4. Method for manufacturing a multi-stage enamelled dial whose surface includes portions in relief (4) forming recesses or bosses, **characterized in that** it includes the following steps:
- forming a ceramic base plate (1);
- depositing an enamel coating (2) on said base plate (1);
- machining the enamel coating (2) but falling short of the base plate (1) to form the portions in relief (4) of said dial.

5. Method according to the preceding claim, **characterized in that** the enamel coating (2) has a thickness of 0.4 mm.

6. Method for manufacturing a multi-stage enamelled dial whose surface includes portions in relief (4) forming recesses or bosses, **characterized in that** the method includes the following steps:
- forming a ceramic base plate (1);
- depositing a first enamel coating (2) on said base plate (1);
- machining the first enamel coating (2) and one part of the base plate (1) to form said portions in relief (4);
- depositing a second enamel coating (12) over said entire surface of the dial or only in the bottom of said portions in relief (4) to form said dial.

7. Method for manufacturing a multi-stage enamelled dial whose surface includes portions in relief (6) forming recesses or bosses, **characterized in that** the method includes the following steps:
- forming a ceramic base plate (1);
- depositing a first enamel coating (2) on said base plate (1);
- machining the first enamel coating (2) and the base plate (1) to form a through passage (9);
- forming an insert (10), the ceramic base (10) of which has a different thickness from said base plate (1);
- depositing a second enamel coating (12) on the insert (10);
- positioning the insert (10) in the through passage (9) to form said portions in relief (6) of the dial.

8. Method according to claim 7, **characterized in that** the thickness of the insert (10) is less than the height of the through passage (9) to form a recess (6) in the dial.

9. Method according to claim 7, **characterized in that** the thickness of the insert (10) is greater than the height of the through passage (9) to form a boss (8) on the dial.

10. Method according to any of claims 6 to 9, **characterized in that** the first enamel coating (2) is identical to the second enamel coating (12).

11. Method according to any of claims 6 to 9, **characterized in that** the first enamel coating (2) is different from the second enamel coating (12).

12. Method according to any of claims 7 to 11, **characterized in that** an additional plate (14) is attached to the back surface of the dial.

13. Method according to any of claims 7 to 11, **characterized in that** the bottom of the insert (10) includes an additional plate (14) integral with said insert (10), having a contour comprised between that of the dial and that of the through passage (9) and bonded to the bottom of the base plate (1) or in a housing (16) formed in the base plate.

14. Method according to any of the preceding claims, **characterized in that** the visible surfaces of said dial have curved shapes.

15. Method according to any of the preceding claims, **characterized in that** the base plate (1) includes an integral foot (18) so as to position said dial.

16. Method according to any of claims 13 to 15, **characterized in that** the additional plate (14) includes an integral foot (18) so as to position said dial.

17. Timepiece comprising a multistage dial **characterized in that** said dial includes an enamelled ceramic base plate (1) and relief (4), said dial being achieved by the method according to any of the preceding claims.

## Patentansprüche

1. Verfahren zum Herstellen eines mehrstufigen emaillierten Zifferblatts, dessen Oberfläche Reliefs (4) aufweist, die Aussparungen oder Erhebungen bilden, **dadurch gekennzeichnet, dass** es die folgenden Schritte umfasst:
- Bilden einer Grundplatte (1) aus Keramik, die Reliefs (4') aufweist;
- Ablagern einer Emaillebeschichtung (2) auf der Grundplatte (1), um das Zifferblatt zu bilden, wobei die Reliefs (4) des Zifferblatts somit entsprechend den Reliefs (4') der Grundplatte (1) gebildet werden,

2. Verfahren nach dem vorhergehenden Anspruch, **dadurch gekennzeichnet, dass** die Reliefs (4) durch Vorformen der Grundplatte (1) gebildet werden.

3. Verfahren nach Anspruch 1, **dadurch gekennzeichnet, dass** die Reliefs (4) durch Bearbeiten der Grundplatte (1) gebildet werden.

4. Verfahren zum Herstellen eines mehrstufigen emaillierten Zifferblatts, dessen Oberfläche Reliefs (4) aufweist, die Aussparungen oder Erhebungen bilden, **dadurch gekennzeichnet, dass** es die folgenden Schritte umfasst:
- Bilden einer Grundplatte (1) aus Keramik;
- Ablagern einer Emaillebeschichtung (2) auf der Grundplatte (1);
- Bearbeiten der Emaillebeschichtung (2), ohne die Grundplatte (1) zu erreichen, um die Reliefs (4) des Zifferblatts zu bilden.

5. Verfahren nach dem vorhergehenden Anspruch, **dadurch gekennzeichnet, dass** die Emaillebeschichtung (2) eine Dicke von 0,4 mm aufweist.

6. Verfahren zum Herstellen eines mehrstufigen emaillierten Zifferblatts, dessen Oberfläche Reliefs (4) aufweist, die Aussparungen oder Erhebungen bilden, **dadurch gekennzeichnet, dass** es die folgenden Schritte umfasst:
- Bilden einer Grundplatte (1) aus Keramik;
- Ablagern einer ersten Emaillebeschichtung (2) auf der Grundplatte (1);
- Bearbeiten der ersten Emaillebeschichtung (2) und eines Teils der Grundplatte (1), um die Reliefs (4) zu bilden;
- Ablagern einer zweiten Emaillebeschichtung (12) auf der gesamten Oberfläche des Zifferblatts oder ausschließlich auf dem Boden der Reliefs (4), um das Zifferblatt zu bilden.

7. Verfahren zum Herstellen eines mehrstufigen emaillierten Zifferblatts, dessen Oberfläche Reliefs (6) aufweist, die Aussparungen oder Erhebungen bilden, **dadurch gekennzeichnet, dass** es die folgenden Schritte umfasst:
- Bilden einer Grundplatte (1) aus Keramik;
- Ablagern einer ersten Emaillebeschichtung (2) auf der Grundplatte (1);
- Bearbeiten der ersten Emaillebeschichtung (2) und der Grundplatte (1), um einen Durchgang (9) zu bilden;
- Bilden eines Einsatzes (10), dessen Basis (10) aus Keramik eine von der Grundplatte (1) verschiedene Dicke aufweist;
- Ablagern einer zweiten Emaillebeschichtung (12) auf dem Einsatz (10);
- Positionieren des Einsatzes (10) in dem Durchgang (9), um die Reliefs (6) des Zifferblatts zu bilden.

8. Verfahren nach Anspruch 7, **dadurch gekennzeichnet, dass** der Einsatz (10) eine Dicke besitzt, die kleiner als die Höhe des Durchgangs (9) ist, um in dem Zifferblatt eine Aussparung (6) zu bilden.

9. Verfahren nach Anspruch 7, **dadurch gekennzeichnet, dass** der Einsatz (10) eine Dicke besitzt, die größer ist als die Höhe des Durchgangs (9), um eine Erhebung (8) im Zifferblatt zu bilden.

10. Verfahren nach einem der Ansprüche 6 bis 9, **dadurch gekennzeichnet, dass** die erste Emaillebeschichtung (2) mit der zweiten Emaillebeschichtung (12) übereinstimmt.

11. Verfahren nach einem der Ansprüche 6 bis 9, **dadurch gekennzeichnet, dass** die erste Emaillebeschichtung (2) von der zweiten Emaillebeschichtung (12) verschieden ist.

12. Verfahren nach einem der Ansprüche 7 bis 11, **dadurch gekennzeichnet, dass** auf die hintere Fläche des Zifferblatts eine zusätzliche Platte (14) aufgebracht ist.

13. Verfahren nach einem der Ansprüche 7 bis 11, **dadurch gekennzeichnet, dass** der Einsatz (10) auf Höhe seines Bodens eine zusätzliche Platte (14) aufweist, die einteilig mit dem Einsatz (10) ausgebildet ist, einen Umriss besitzt, der zwischen jenem des Zifferblatts und jenem des Durchgangs (9) liegt, und auf den Boden der Grundplatte (1) oder in einen in der Grundplatte gebildeten Aufnahmesitz (16) geklebt ist.

14. Verfahren nach einem der vorhergehenden Ansprüche, **dadurch gekennzeichnet, dass** die sichtbaren Flächen des Zifferblatts gekrümmte Formen haben.

15. Verfahren nach einem der vorhergehenden Ansprüche, **dadurch gekennzeichnet, dass** die Grundplatte (1) einen angeformten Fuß (18) aufweist, um das Zifferblatt zu positionieren.

16. Verfahren nach einem der Ansprüche 13 bis 15, **dadurch gekennzeichnet, dass** die zusätzliche Platte (14) einen angeformten Fuß (18) aufweist, um das Zifferblatt zu positionieren.

17. Zeitanzeige mit einem mehrstufigen Zifferblatt, **dadurch gekennzeichnet, dass** das Zifferblatt eine vom Verfahren nach einem der vorgehenden Ansprüchen hergestellte emaillierte Grundplatte (1) aus Keramik und mit Reliefs (4) aufweist.
